# EUROPEAN PATENT APPLICATION

(11) **EP 1 467 122 A1**
(43) Date of publication of application: **13.10.2004**
(21) Application number: 04101479.6
(22) Date of filing: 09.04.2004
(51) Int. Cl.: F16F 15/30

(54) **Method of producing an engine flywheel, and engine flywheel so produced**

(30) Priority: 11.04.2003 IT TO20030282
(71) Applicant: AGLA S.p.A., 10051 AVIGLIANA (IT)
(72) Inventor: Lucchini, Giuseppe, 10125 Torino (IT)
(74) Representative: Jorio, Paolo, Dr. Ing.

(57) **Abstract**

A method of producing an automotive engine flywheel (1), and including the steps of forming an annular base body (2) by packing and crimping a number of metal sheets (6); pressing a toothed disk (3) made of sheet metal and having a central hole and a number of peripheral radial teeth (10); and axially gripping together at least the base body (2) and the toothed disk (3) by fastening means (5).

## Description

The present invention relates to a method of producing an automotive engine flywheel, and to an engine flywheel so produced.

As is known, the term "engine flywheel" normally refers to a metal disk of particular shape, fitted to the drive shaft of a vehicle, and which substantially provides for accumulating energy at the active stage of the engine, and yielding energy at the other stages to regulate rotation of the drive shaft.

Known engine flywheels comprise a central portion normally made of cast iron and defining the main portion of the flywheel mass; and a toothed peripheral rim normally made of steel and which meshes, in use, with the vehicle starting motor pinion. One of the opposite faces of the engine flywheel is normally used as a friction surface for the driven disk of the vehicle clutch.

Engine flywheels of the above type are currently produced as follows.

The toothed rim is produced by deforming a straight steel bar to bring the opposite ends into contact, and then welding the ends. Before being deformed, the bar is worked, e.g. machined, to form the teeth.

Following the above operations, the resulting toothed rim is induction hardened.

The central portion of the engine flywheel, i.e. the part defining the main portion of the flywheel mass, is formed from an iron casting precision-machined in the areas interacting with the other component parts of the vehicle engine, including the area for receiving the toothed rim.

At this point, the toothed rim is pressed onto the cast iron central portion, and the flatness of the resulting engine flywheel obviously depends on how accurately the toothed rim and the cast iron central portion are connected. In actual practice, machining of the peripheral area of the cast iron central portion must be such as to compensate any flatness errors on the toothed rim formed by deformation and induction hardened.

The method described is relatively expensive, on account of the type of raw materials used, in particular cast iron, and above all on account of the high-precision machining required on the cast iron central portion.

It is an object of the present invention to provide a method of producing an engine flywheel, designed to eliminate the aforementioned drawback typically associated with known methods.

According to the present invention, there is provided a method of producing an automotive engine flywheel, characterized by comprising the steps of:
- forming an annular base body by packing and crimping a number of metal sheets;
- pressing a toothed disk made of sheet metal and having a central hole and a number of peripheral radial teeth; and
- axially gripping together at least said base body and said toothed disk by fastening means.

The present invention also relates to an automotive engine flywheel comprising an annular base body and a peripheral toothed rim, characterized in that said base body is defined by a number of metal sheets packed and crimped together; and in that said toothed rim is defined integrally by the peripheral portion of a toothed disk pressed from sheet metal and gripped axially to said base body by fastening means.

A preferred, non-limiting embodiment of the present invention will be described by way of example with reference to the accompanying drawings, in which:
Figure 1 shows a partly sectioned front view of an engine flywheel produced using the method according to the present invention;
Figure 2 shows a section along line II-II in Figure 1;
Figure 3 shows the same section as in Figure 2, but with the component parts of the engine flywheel detached in the assembly position;
Figure 4 shows a much larger-scale view of the fabrication of a portion of the Figure 3 engine flywheel component defining the major part of the flywheel mass;
Figure 5 shows a section along line V-V in Figure 4.

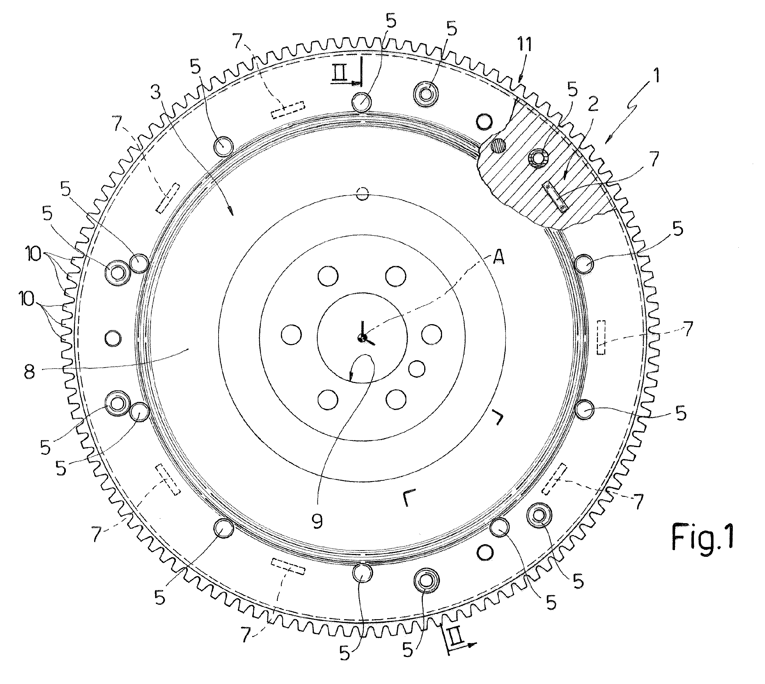

With reference to Figures 1, 2 and 3, number 1 indicates as a whole an automotive engine flywheel produced according to the present invention.

Flywheel 1 substantially comprises an annular base body 2 of axis A; and two annular disks 3, 4 made of sheet metal, preferably steel, and gripped axially to opposite sides of base body 2 by means of a number of pin fastening members 5 - in the example shown, a number of nails. Alternatively, other fastening means may be used, such as rivets.

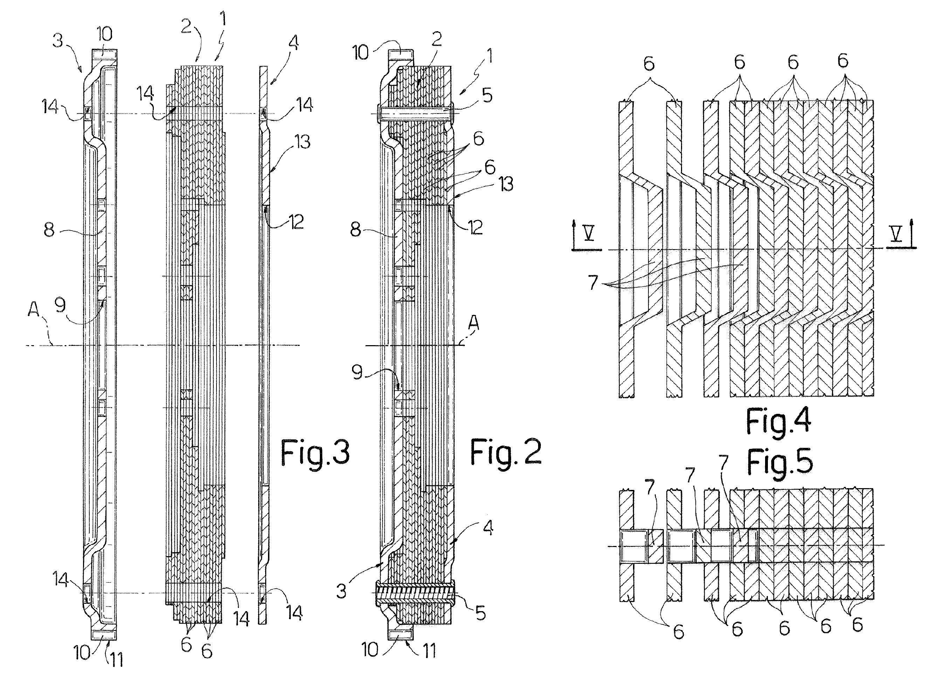

Base body 2 defines the major portion of the flywheel mass, and comprises a number of annular metal sheets 6 (Figures 4 and 5), preferably of steel, packed and crimped together.

More specifically, base body 2 is produced by feeding a sheet metal strip (not shown) to a known progressive die (not shown) in which the strip is converted, by a known method used in the fabrication of electric motors, into a number of contoured sheets 6 compacted and crimped together.

As shown in detail in Figures 4 and 5, each sheet 6 is roughly a millimetre thick, is preferably of a thickness ranging between 0.5 and 1.5 mm, is 1.2 mm thick in the example shown, and has a number of projecting portions 7 projecting from one side of sheet 6 in a direction substantially parallel to axis A.

At the pressing stage, the various sheets 6 are compacted axially and crimped together by engaging projecting portions 7 of each sheet 6 inside the corresponding projecting portions 7 of the adjacent sheet/s 6.

With reference to Figures 1, 2 and 3, disk 3 is pressed, and comprises integrally a central portion 8 having a through hole 9 of axis A; and a number of peripheral teeth 10 projecting radially from central portion 8 and defining a toothed rim 11 which, in use, meshes with a pinion (not shown) of a starting motor (not shown) of the vehicle.

More specifically, disk 3 is pressed and rolled in one operation, and is preferably induction hardened.

Disk 4 is also pressed, has a central through hole 12 of axis A, and defines, on the opposite side to that contacting base body 2, a friction surface 13 which cooperates, in use, with a clutch (not shown) of the vehicle. To achieve the necessary grip of surface 13, disk 4 is induction hardened.

Disks 3 and 4, and sheets 6 defining base body 2, have respective through holes 14 having axes parallel to axis A, and which are engaged by respective fastening members 5 when gripping disks 3 and 4 to base body 2.

As shown in Figures 1 and 2, some of fastening members 5 have holes and are threaded internally.

The advantages of engine flywheel 1 and the method of producing it, both objects of the present invention, will be clear from the foregoing description.

In particular, as opposed to high-precision machining, engine flywheel 1 involves simply pressing the various component parts (base body 2 and disks 3 and 4). This, combined with the fact that the raw material used is substantially sheet metal, provides for considerably reducing overall cost as compared with known engine flywheels, particularly in the case of mass production, which would offset die set-up cost.

Moreover, by comprising a number of separate component parts (sheets 6 of base body 2, and disks 3 and 4) gripped together, engine flywheel 1 is characterized by a number of discontinuous surfaces between the component parts, thus reducing sound and heat propagation, with obvious benefits in automotive applications.

Clearly, changes may be made to engine flywheel 1 and the relative production method as described and illustrated herein without, however, departing from the scope of the accompanying Claims.

In particular, engine flywheel 1 may have no disk 4; in which case, base body 2 should be specially treated so that the opposite end surface to that contacting disk 3 has the necessary grip to interact with the vehicle clutch.

## Claims

1. A method of producing an automotive engine flywheel (1), **characterized by** comprising the steps of:
- forming an annular base body (2) by packing and crimping a number of metal sheets (6);
- pressing a toothed disk (3) made of sheet metal and having a central hole and a number of peripheral radial teeth (10); and
- axially gripping together at least said base body (2) and said toothed disk (3) by fastening means (5).

2. A method as claimed in Claim 1, **characterized by** comprising the further step of pressing a friction disk (4) made of sheet metal and having a central hole; said axially gripping step being performed by placing said toothed disk (3) and said friction disk (4) against opposite sides of said base body (2), and securing the assembly so formed by means of said fastening means (5).

3. A method as claimed in Claim 2, **characterized in that** said friction disk (4) is induction hardened.

4. A method as claimed in any one of the foregoing Claims, **characterized in that** said step of forming said base body (2) is performed by feeding a strip of sheet metal to a progressive die.

5. An automotive engine flywheel (1) comprising an annular base body (2) and a peripheral toothed rim (11), **characterized in that** said base body (2) is defined by a number of metal sheets (6) packed and crimped together; and **in that** said toothed rim (11) is defined integrally by the peripheral portion of a toothed disk (3) pressed from sheet metal and gripped axially to said base body (2) by fastening means (5).

6. An engine flywheel as claimed in Claim 5, **characterized by** comprising a friction disk (4) made of sheet metal, having a central hole, cooperating in use with a clutch of a vehicle, and gripped to said base body (2) by said fastening means (5) on the opposite side to said toothed disk (3).

7. An engine flywheel as claimed in Claim 5 or 6, **characterized in that** said fastening means comprise a number of pin members (5) engaging respective through holes (14) in said disks (3, 4) and said base body (2).
